(19) Europäisches Patentamt

European Patent Office

Office européen des brevets

(11) **EP 1 848 129 A1**

(12) **EUROPEAN PATENT APPLICATION**

(43) Date of publication:
24.10.2007 Bulletin 2007/43

(51) Int Cl.:
*H04B 10/18* (2006.01)    *H04B 10/155* (2006.01)

(21) Application number: 06112780.9

(22) Date of filing: **19.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Acreo AB**
**164 40 Kista (SE)**

(72) Inventors:
• **Forzati, Marco**
**117 38, STOCKHOLM (SE)**
• **Mårtensson, Jonas**
**120 68, STOCKHOLM (SE)**
• **Berntsson, Anders**
**141 41, HUDDINGE (SE)**

(74) Representative: **Engdahl, Stefan**
**P.O. Box 45086**
**104 30 Stockholm (SE)**

(54) **Multi-channel phase modulation method for suppression of intra-channel non-linear distortion**

(57)     The present invention relates to a method for reducing distortion of data modulated optical signals in a plurality of wavelength channels in a WDM-transmission link and to an optical transmitter for use in an optical transmission network. There is provided a method for modulating the phase of a plurality of wavelength channels spaced from each other by a channel spacing in a WDM-transmission link. The method comprises the step of asynchronously modulating the plurality of channels. A modulation rate of the modulation is set to be in a range of approximately 20% to approximately 70% of a bit rate of any one of the channels. Further, a modulation depth of the modulation is set to be in the range from zero to approximately the channel spacing divided by the modulation rate.

Fig. 1

**EP 1 848 129 A1**

**Description**

Technical Field of the Invention

The present invention relates to a method for reducing distortion of data modulated optical signals in a plurality of wavelength channels in a WDM-transmission link and to an optical transmitter for use in an optical transmission network.

Background of the Invention

Optical wavelength division multiplexed transmission systems typically operate at up to 10 Gb/s per channel. Growing demand for capacity in transmission systems is leading to a shortage of transmission capacity. A cost-effective and flexible solution to this problem is to add (or replace 10-Gb/s channels with) 40-Gb/s channels in transmission systems where more capacity is needed. In order for this solution to be inexpensive and flexible, the 40-Gb/s signals must be successfully transmitted on wavelength-division multiplexed (WDM), dispersion-managed (DM) transmission links designed and optimized for 10-Gb/s signals. This poses some challenges in terms of filtering, dispersion, and especially non-linear effects. In the art, it is known that Return-to-Zero (RZ) signals are more tolerant to non-linear effects than Non-Return-to-Zero (NRZ) signals, and that for 40 Gbit/s signals the most critical non-linear impairments are intra-channel rather than inter-channel. Intra-channel impairments occur when two or more bits within one channel interfere with each other, thereby creating ghost pulses and amplitude jitter. In the past several attempts have been made to reduce the abovementioned intra-channel non-linear effects by using RZ-signals in combination with appropriate phase modulation techniques. For example, a modulation format referred to as Alternate-Phase Return-to-Zero (APRZ) has been proposed to decrease distortion. For APRZ, synchronization between the phase modulation signal and the data signal is needed in order to obtain the desired phase alteration, e.g. the phase may alternate every second bit such as to decrease distortion due to intra-channel non-linear effects. A problem of methods proposed in the prior art is that each channel requires a separate phase modulator. Further, some of the proposed methods increase the spectral bandwidth of the signal, whereby filtering through a DWDM-multiplexer is rendered more difficult.
In US patent no. 6,606,178, there is disclosed an optical transmitter comprising a plurality of sources of modulated optical signals, a multiplexer coupled to each of the sources for receiving the modulated optical signal and transmitting the optical signals over a long fiber waveguide, a phase modulator for modulating the phase of the optical signals propagating through the long fiber waveguide and an optical amplifier for amplifying the phase-modulated optical signals as the optical signals propagate through the long fiber waveguide. As a consequence of the modulator being arranged after the multiplexer, all signals are modulated simultaneously. Further, there is disclosed a method of modulating the phase of the optical signals at a modulation frequency that reduces the growth of four wave mixing (FWM) products that are otherwise generated along the length of the fiber. In an embodiment of the invention disclosed in US patent no. 6,606,178 the modulation waveform is a square wave. A problem of US patent no. 6,606,178 is that with the transmitter and method disclosed therein, intra-channel, non-linear distortion effects (i.e. distortion due to interference among bits within a channel) are present.

Summary of the Invention

An object of the present invention is to reduce distortion of data modulated optical signals caused by intra-channel non-linear effects in a plurality of wavelength channels in a WDM-transmission link.
This object is met by a method and an optical transmitter as set forth in the appended independent claims. Further embodiments are defined in the appended dependent claims.
According to a first aspect of the invention, there is provided a method for modulating the phase of a plurality of wavelength channels spaced from each other by a channel spacing in a WDM-transmission link, comprising the step of asynchronously modulating the plurality of channels. A modulation rate of the modulation is set to be in a range of approximately 20% to approximately 70% of a bit rate of any one of the channels. Further, a modulation depth of the modulation is set to be in the range from zero to approximately the channel spacing divided by the modulation rate.
In a second aspect of the invention, an optical transmitter for use in an optical transmission network is provided. The optical transmitter comprises a plurality of sources for generating modulated optical signals, each source representing a channel in a WDM-transmission link, wherein channels are spaced from each other by a channel spacing, a multiplexer connected to each of the sources for receiving the modulated optical signals and transmitting the modulated optical signals over the transmission link. The optical transmitter further comprises a phase modulator arranged to modulate the phase of the modulated optical signals, and an optical amplifier for amplifying the modulated optical signals. A modulation rate of the phase modulator is set to be in the range of approximately 20% to approximately 70% of a bit rate of any one of the modulated optical signals, and a modulation depth of the phase modulator is set to be in the range from zero to approximately the channel spacing divided by the modulation rate.

During development of modulation techniques forming a basis for the present invention, the inventors have noted that by scrambling, i.e. asynchronously modulating, a phase and frequency shift of a plurality of data modulated optical signals by properly setting particular modulation parameters, reduction of intra-channel non-linear distortions is achieved. Intra-channel non-linear distortions are built up of a number of undesired interactions from different bits within the same channel. The inventors realized that by tuning parameters pertaining to modulation rate (or modulation frequency) and modulation depth to lie in a specific range, an improvement of the signal quality could be obtained. Thus, the modulation rate and the modulation depth of the phase modulation is set in a combination that, firstly, gives consecutive bits different phase or frequency, and that, secondly, results in a spectral broadening of single wavelength signals which is less than the channel spacing in order to make it possible to separate different signals in a demultiplexer at the receiver. To achieve this the modulation rate should be less then the bit-rate. In other words, by applying a phase modulation signal having a certain amplitude and frequency, such that a phase and frequency condition for reducing the effect of the undesired nonlinear interactions is satisfied, the power of the ghost pulses and the amplitude jitter is decreased.

Advantageously, the modulation rate is tuned to lie in the range of 20% to 70% of the bit rate, since a receiver sensitivity improvement of more than 1.5 dB may be attained for a range of selected modulation depth values, as will be shown hereinafter.

Advantageously, the modulation depth values range from zero to less than or equal to the channel spacing divided by the modulation frequency, which is explained in more detail hereinafter.

More specifically, in embodiments of the present invention, it is preferred to set the modulation depth to approximately $0.4\,\Pi - \Pi$, most preferable to approximately $0.5\,\Pi - 0.9\,\Pi$. For selected modulation rates, these two modulation depth intervals imply a receiver sensitivity improvement of more than 1.5 dB and 3 dB, respectively.

Additionally, according to embodiments of the present invention, the receiver sensitivity improvement is further improved if the modulation rate is set to 35% to 65% of said bit rate. In this case, the receiver sensitivity improvement is 3 dB or more for chosen values of the modulation depth.

In embodiments of the present invention, the modulation rate may be adjustable in a range as specified above.

Moreover, in further embodiments of the present invention, the modulation depth may be adjustable in a range as specified above.

Further features of, and advantages with, the present invention will become apparent when studying the appended claims and the following description. Those skilled in the art realize that different features of the present invention may be combined to create embodiments other than described in the following, without departing from the scope of the present invention.

Brief Description of the Drawings

The invention will become more apparent from the accompanying drawings, which are provided by way of non-limiting example and on which:

Fig. 1 schematically illustrates a transmission system according to the present invention,
Fig. 2 shows a graph of an optical signal and a graph of an exemplary modulation signal,
Fig. 3 is a diagram of receiver sensitivity improvement versus modulation rate for a typical transmission link consisting of five fiber spans of 100 km each, and
Fig. 4 is a diagram, in which receiver sensitivity improvement versus modulation depth is plotted for a typical transmission link consisting of five fiber spans of 100 km each.

Detailed Description

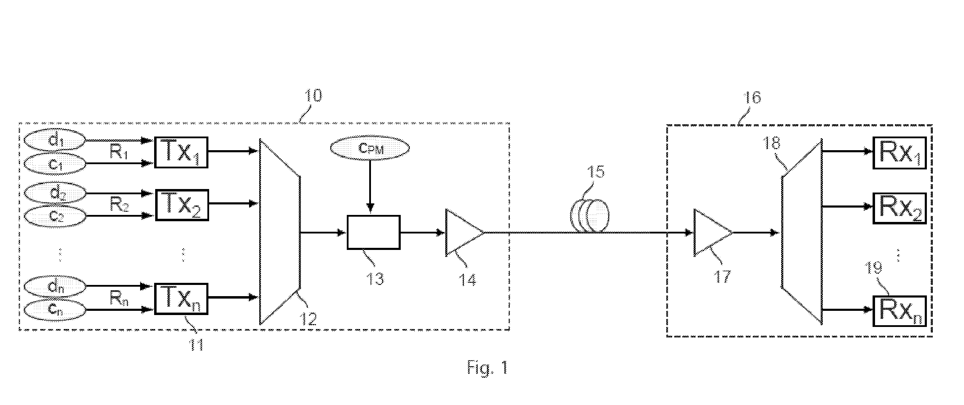

In Fig. 1, there is shown an apparatus 10 for transmitting an optical signal that includes a number of optical transmitters $Tx_{1...n}$, a wavelength multiplexer 12, a phase modulator 13 and an amplifier 14. Each optical transmitter $Tx_{1...n}$ is clocked by a specific clock signal $c_{1...n}$ and it generates an optical signal, which is modulated by an electrical data signal $d_{1...n}$ at bit rate $R_{1...n}$, to be transmitted on a specific channel in a wavelength-division multiplexing (WDM) transmission system. Each transmitter is connected to an input port of the multiplexer 12, in which all connected signals are combined into one single multiplexed signal to be transmitted on one optical fiber 15. The multiplexed signal is then phase modulated by a phase modulator 13, which operates at a frequency $f_{PM}$ and is coupled to the output port of the wavelength multiplexer and to the input port of the booster amplifier 14.

Further, in Fig. 1, there is shown an apparatus 16 for receiving an optical signal. The apparatus 16 comprises an amplifier 17, a demultiplexer 18 and a number of optical receivers $Rx_{1...n}$ for receiving and converting the optical signals to electrical signals.

Referring to Fig. 1, the phase modulator 13 modulates the phase of the multiplexed optical signal. The modulation is controlled by means of an electrical wave having a peak-to-peak amplitude V and a frequency $f_{PM}$ such that the peak-to-peak amplitude of the phase modulation is $\Delta\Phi_{pp} = \Pi V / V_{\Pi}$ (i.e. $\Delta\Phi_{pp} = \Pi$, if $V = V_{\Pi}$) and its frequency becomes $f_{PM}$. The electrical wave controlling the phase modulator is independent of the clock signals $c_{1...n}$ employed for generating each respective signal. As a consequence, the phase modulation is asynchronous for each channel. It is preferred that the waveform of the modulation signal is periodical and has an inclined leading edge and an inclined trailing edge. Most preferably, a sinusoidal waveform is employed. In the following discussion a sinusoidal wave is employed, but it is to be understood that other non-square waves alternatively may be used. If the phase-modulating signal has the form of a sine wave, the optical phase $\Phi(t)$ of the modulation signal and its time derivative $\nu(t) = (1/2\pi)\, d\Phi/dt$ (i.e. its frequency shift) will for each wavelength channel be:

$$\Phi(t) \;=\; 0.5\ \Delta\Phi_{pp}\ \sin(2\pi f_{PM} t)$$

$$\nu(t) \;=\; 0.5\ \Delta\Phi_{pp}\ f_{PM}\ \cos(2\pi f_{PM} t)$$

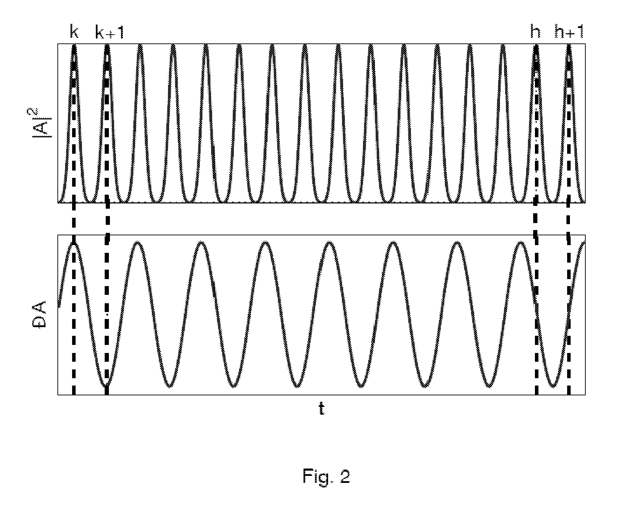

According to the equations above, neighboring bit slots (see Fig. 2) will have different phase and different frequency shifts. If the phase modulation is synchronous, the phase and frequency shift (at the bit-slot center) would alternate between N values, where the integer $N = R / f_{PM}$ and R denotes the bit rate. For example, if N = 2, phase and frequency shift would alternate between two values. The amplitude of this phase alternation and frequency-shift alternation would be constant throughout the signal. In the case of asynchronous phase modulation, this will be true only for bit slots close to each other, and only if the ratio between the bit rate and the phase-modulation frequency is approximately equal to N.

Referring to Fig. 2, there is illustrated how the phase and frequency shift vary for different pulses, or bit slots. In the Figure the centers of four pulses (bit slot centers) denoted by k, k+1, h and h+1, are indicated by means of dashed lines.

In the topmost diagram of Fig. 2, there is shown the intensity of a number of pulses of an optical signal at bit rate R. For the sake of simplicity, all the pulses correspond to logical "ones".

In the bottommost diagram of Fig. 2, there is illustrated the phase of the signal after being phase-modulated at a frequency $f_{PM}$ approximately half the bit rate R of the signal. It can be seen that, for bit slot k, the optical phase is maximal (i.e. the bit slot center coincides with the maximum of the modulation signal). For bit slot k+1, the phase is minimal (i.e. the bit slot center coincides with the minimum of the modulation signal): the phase-alternation amplitude is maximum, $\Delta\Phi_k = \Delta\Phi_{pp}$. The frequency shift is zero for both bit slots k and k+1: the amplitude of the frequency-shift alternation is zero, $\Delta\nu_k = 0$

The difference between $f_{PM}$ and R will cause a progressive shift in the pulses illustrated in the topmost diagram in Fig. 2, so that away from bit slot k, the amplitude of the phase alternation and frequency-shift alternation will be different than $\Delta\Phi_k$ and $\Delta\nu_k$.

Moving to the right in the topmost diagram of Fig. 2, around a bit slot h far enough from bit slot k, a condition is reached in which the bit slot center coincides with the zero-crossing point of the modulation signal, so that the phase-alternation amplitude is zero, $\Delta\Phi_k = 0$, and the amplitude of the frequency-shift alternation is maximum, $\Delta\nu_k = \Delta\Phi_{pp} f_{PM}$.

In other words, because the phase modulation and the data signal are asynchronous, phase alternation of the resulting phase-modulated signals will for N = 2 vary with time, continuously oscillating between two conditions, as illustrated in Fig. 2:

A) a first condition prevails e.g. for bits k and k+1 in Fig. 2, wherein the phase-modulation maxima and minima coincide with the bit slot centers, so that $\Delta\Phi_k = \Delta\Phi$ and $\Delta\nu_k = 0$.
B) a second condition prevails e.g. for bits h and h+1 in Fig. 2, wherein the phase-modulation zero-crossing points coincide with the bit slot centers, so that $\Delta\Phi_h = 0$ and $\Delta\nu_h = \Delta\Phi_{pp} f_{PM}$.

In condition A, the build-up of ghost pulses and amplitude jitter is reduced because of alternating phase (as in APRZ). In prior art, it has been shown that reduction of intra-channel non-linear effects is achieved for phase-alternation amplitude $\Delta\Phi = \Pi 2$ for very narrow pulses and slightly higher values of $\Delta\Phi$ for wider pulses. In condition B, the build-up of ghost pulses and amplitude jitter is reduced because the alternating frequency shift fulfills a frequency matching condition for reduction of intra-channel non-linear distortion. In this case, reduction of distortion due to non-linear intra-channel effects increases with increasing $\Delta\nu$. During the transitions between extreme conditions A and B, the bit slots will at least partially undergo the phase and frequency alternations described in the above, which will result in increased non-linear tolerance for the channel.

For N > 2, phase and frequency shift will vary between several values (instead of two as for N = 2), and for non-integer N the phase and frequency shift will no longer vary periodically, but the neighboring bit slots will still have different values of phase and frequency shift. For $f_{PM} \approx 0.5$ R, further improved receiver sensitivity is obtained at approximately $\Delta\Phi_{pp} = \Pi / 2$, (even considering that for most of the time the bit alternation is $\Delta\Phi < \Delta\Phi_{pp}$).

When it comes to the other phase modulation parameter, $f_{PM}$, this should be high enough to have significant frequency-match break-up, but also not large enough to cause such a severe spectral broadening that neighboring wavelength channels start interfering with each-other. As a first approximation, the spectral broadening is determined by the shifting of spectral components away from each other by an amount corresponding to the frequency-shift alternation, $\Delta\Phi_{pp} f_{PM}$. If this shift exceeds the spectral range allocated to half the channel spacing, i.e. the channel spacing, $S_{ch}$, a part of the spectrum will end up in the wavelength region allocated to the neighboring channel, and interference will take place. Therefore the following condition should be met: $\Delta\Phi_{pp} f_{PM} < S_{ch}$, or $f_{PM} < S_{ch}/\Delta\Phi_{pp}$.

As an example of how the proper choice of $\Delta\Phi_{pp}$ and $f_{PM}$ can improve the performance of a transmission link, numerical simulations were performed for a dispersion-managed system, consisting of 5 spans, each 100 km long, with perfect on-line dispersion compensation and no pre-compensation. The system was set up with three channels of RZ signals with 50% duty cycle at R = 40 Gb/s, and channel spacing was 100 GHz. The wavelength multiplexer has a 3-dB pass band of 75 Ghz band and the wavelength demultiplexer has a 3-dB pass band of 50 GHz. The system was set up with 6 dBm launch power per channel into the SSMF (standard single-mode fiber), and 1 dBm into the DCF (dispersion compensating fiber). The transmission performance is evaluated in terms of power penalty, i.e. degradation in receiver sensitivity with respect to the sensitivity is obtained for a transmitter and a receiver with no transmission line therebetween. Receiver sensitivity is defined as the minimum power needed at the receiver in order to achieve a bit error ratio of $10^{-9}$.

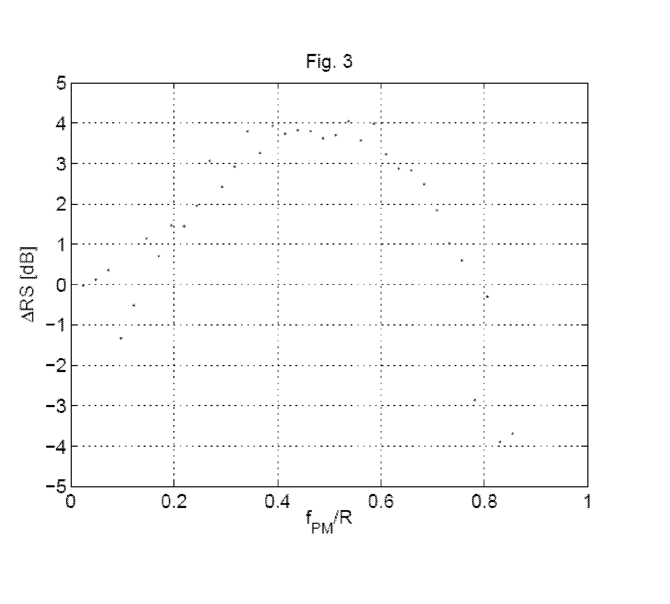

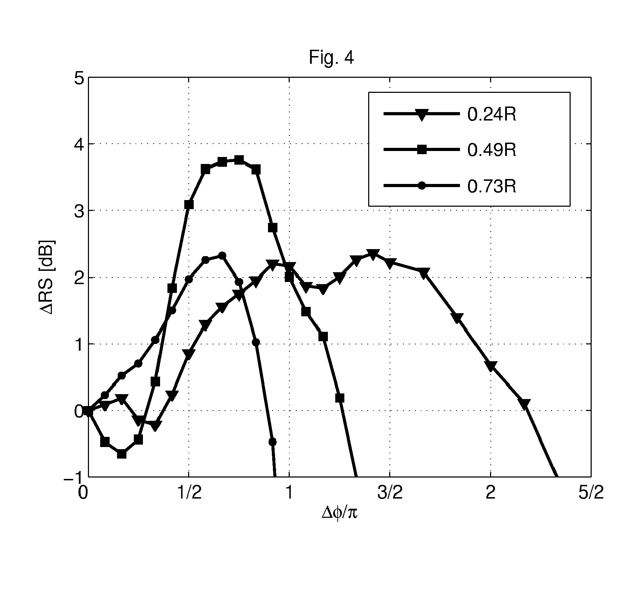

The results of the simulations for the central wavelength channel, are plotted in Fig. 3 and 4. It can be seen that asynchronous phase modulation improves the non-linear tolerance in a approximate range of $0 < \Delta\Phi < S_{ch} / f_{PM}$. Performance improvement is very high for values of $\Delta\Phi_{pp,opt}$ around $2 \Pi / 3$, and $f_{PM,opt}$ around 0.5 R, and slightly lower but still high within a range of $\pm 40\%$ from $\Delta\Phi_{pp,opt}$ and $f_{PM,opt}$. The values $\Delta\Phi_{pp,opt}$ and $f_{PM,opt}$ will most likely change if the parameters of the optical system, such as pulse chirp, duty cycle, span length, dispersion map and launch power, are changed.

In the diagram in Fig. 3, receiver sensitivity improvement in dB, $\Delta$RS, as a function of phase modulation rate over bit rate is plotted, for $\Delta\Phi_{pp} = 5 \Pi / 6$. As can be seen from Fig. 3, a phase-modulation frequency up to 80% of the bit rate (that is in this case of a frequency of 10-30 GHz for a 40 Gb/s signal) improves the transmission performance.

For the phase-modulation amplitude of $\Delta\Phi_{PP} = 5 \Pi / 6$, it is preferred to set (or adjust) the modulation rate in a range from approximately 20% to 70% of the bit rate of the any one the three channels, whereby the receiver sensitivity improvement becomes greater than or equal to 1.5 dB. Most preferably, the modulation rate is set (or is adjustable) in a range from approximately 35% to 65%, whereby the receiver sensitivity becomes greater than or equal to 3 dB.

Fig. 4 shows a further result from a simulation, wherein the modulation depth is varied for three different phase-modulation frequencies: 24%, 49% and 73% of the bit rate R. In Fig. 4, receiver sensitivity improvement as a function of modulation depth over $\Pi$ is plotted. In general, there is an improvement of the signal quality, when the modulation depth is less than channel spacing divided by the modulation rate. It is, however, preferred to have a receiver sensitivity improvement of 1.5 dB or more, which results in a modulation depth of approximately $2 \Pi / 3 \pm 40 \%$ for a modulation rate in the vicinity of half the bit rate, which is approximately equal to a range of $0.4 \Pi - \Pi$. From the Fig. 4, it can also be noted that for a range of $0.5 \Pi - 0.9 \Pi$, the receiver sensitivity is above approximately 3 dB.

Even though the invention has been described with reference to a specific exemplifying embodiment thereof, many different alterations, modifications and the like will become apparent for those skilled in the art. The described embodiment is therefore not intended to limit the scope of the invention, as defined by the appended claims.

**Claims**

1. A method for modulating the phase of a plurality of wavelength channels spaced from each other by a channel spacing in a WDM-transmission link, comprising the step of:

   asynchronously modulating said plurality of channels, wherein
   a modulation rate of said modulation is set to a value in a range from approximately 20% to approximately 70% of a bit rate of any one of the channels, and
   a modulation depth of said modulation is set to a value in a range from zero to approximately said channel spacing divided by said modulation rate.

2. The method according to claim 1, wherein said modulation depth is set to a value in a range of approximately $0.4 \Pi - \Pi$.

3. The method according to claim 1, wherein said modulation depth is set to a value in a range of approximately 0.5 $\Pi$ - 0.9 $\Pi$.

4. The method according to any one of the preceding claims, wherein said modulation rate is set to a value in a range from approximately 35% to approximately 65% of said bit rate.

5. The method according to any one of the preceding claims, wherein said plurality of channels comprise RZ-type signals.

6. The method according to any one of the preceding claims, wherein a modulation signal employed in the asynchronous modulation is arranged to have an inclined leading edge and an inclined trailing edge.

7. The method according to claim 6, wherein the modulation signal has a sinusoidal waveform.

8. The method according to any one of the preceding claims, further comprising a step of multiplexing said plurality of channels into said WDM-transmission link prior to said asynchronous modulation.

9. An optical transmitter for use in an optical transmission network, comprising:

   a plurality of sources for generating modulated optical signals, each source representing a channel in a WDM-transmission link, wherein channels are spaced from each other by a channel spacing,
   a multiplexer connected to each of said sources for receiving said modulated optical signals and transmitting said modulated optical signals over said transmission link,
   a phase modulator arranged to modulate the phase of said modulated optical signals, and
   an optical amplifier for amplifying said modulated optical signals, wherein
   a modulation rate of said phase modulator is set to a value in a range from approximately 20% to approximately 70% of a bit rate of any one of the modulated optical signals, and
   a modulation depth of said phase modulator is set to a value in a range from zero to approximately said channel spacing divided by said modulation rate.

10. The optical transmitter according to claim 9, wherein said modulation depth is set to a value in a range of approximately 0.4 $\Pi$ - $\Pi$.

11. The optical transmitter according to claim 9 or 10, wherein said modulation depth is set to a value in a range of approximately 0.5 $\Pi$ - 0.9 $\Pi$.

12. The optical transmitter according to any one of claims 9-11, wherein said modulation rate is set to a value in a range from approximately 35% to approximately 65% of said bit rate.

13. The optical transmitter according to any one of claims 10-12, wherein said modulated optical signals are RZ-type signals.

14. The optical transmitter according to any one of claims 9-13, wherein said phase modulator is located after the multiplexer such that all channels are modulated simultaneously.

Fig. 1

Fig. 2

Fig. 3

Fig. 4

**EP 1 848 129 A1**

| | **EUROPEAN SEARCH REPORT** | Application Number |
|---|---|---|
| European Patent Office | | EP 06 11 2780 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/057734 A1 (IGOREVICH LAKOBA TARAS [US]) 25 March 2004 (2004-03-25)<br>* paragraph [0026] - paragraph [0041] *<br>* paragraph [0052] - paragraph [0053] *<br>* figures 1,8 *<br>----- | 1-14 | INV.<br>H04B10/18<br>H04B10/155 |
| D,X | US 6 606 178 B1 (RHEE JUNE-KOO ET AL) 12 August 2003 (2003-08-12)<br>* the whole document *<br>----- | 1-14 | |
| X | RHEE J-K ED  - SOCIETE DES ELECTRICIENS ET DES ELETRONICIENS:  "FOUR WAVE MIXING SUPPRESSION USING PHASE MODULATION IN MULTI-SPAN DWDM TRANSMISSIONS" 25TH EUROPEAN CONFERENCE ON OPTICAL COMMUNICATION. (ECOC'99). NICE, FRANCE, SEPT. 27 - 30, 1999. REGULAR AND INVITED PAPERS, EUROPEAN CONFERENCE ON OPTICAL COMMUNICATION (ECOC), PARIS : SEE, FR, vol. VOL. I OF II, 26 September 1999 (1999-09-26), pages I-206, XP001035365 ISBN: 2-912328-12-8<br>* the whole document *<br>----- | 1-14 | |
| A | FORZATI M ET AL:  "REDUCTION OF INTRACHANNEL FOUR-WAVE MIXING USING THE ALTERNATE PHASE RZ MODULATION FORMAT" IEEE PHOTONICS TECHNOLOGY LETTERS, vol. 14, no. 9, 1 September 2002 (2002-09-01), pages 1285-1287, XP002397973<br>* the whole document *<br>----- | 1-14 | TECHNICAL FIELDS SEARCHED (IPC)<br><br>H04B |

The present search report has been drawn up for all claims

| Place of search | Date of completion of the search | Examiner |
|---|---|---|
| The Hague | 7 September 2006 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 2780

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2006

| Patent document cited in search report | | Publication date | Patent family member(s) | | Publication date |
|---|---|---|---|---|---|
| US 2004057734 | A1 | 25-03-2004 | NONE | | |
| US 6606178 | B1 | 12-08-2003 | AU | 1187101 A | 24-04-2001 |
| | | | CA | 2385545 A1 | 29-03-2001 |
| | | | CN | 1376343 A | 23-10-2002 |
| | | | EP | 1219052 A1 | 03-07-2002 |
| | | | JP | 2003510890 T | 18-03-2003 |
| | | | WO | 0122627 A1 | 29-03-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6606178 B